# EUROPÄISCHE PATENTSCHRIFT

(11) **EP 2 412 991 B1**
(45) Veröffentlichungstag und Bekanntmachung des Hinweises auf die Patenterteilung: **06.07.2016**
(21) Anmeldenummer: 11006297.3
(22) Anmeldetag: 29.07.2011
(51) Int. Cl.: F16B 37/06

(54) **Selbststanzendes Mutterelement und Zusammenbauteil bestehend aus dem Mutterelement und einem Blechteil**
Self-stamping nut element and assembly component comprising the nut element and a sheet metal section
Elément d'écrou auto-perforant et composant constitué de l'élément d'écrou et d'un élément de tôle

(30) Priorität: 30.07.2010 DE 102010032866
(43) Veröffentlichungstag der Anmeldung: 01.02.2012
(73) Patentinhaber: PROFIL Verbindungstechnik GmbH & Co. KG, 61381 Friedrichsdorf (DE)
(72) Erfinder: Babej, Jiri, 35423 Lich (DE); Sowa, Christian, 63075 Offenbach (DE); Humpert, Richard, Dr., 61231 Bad Nauheim (DE); Vieth, Michael, 61118 Bad Vilbel (DE)
(74) Vertreter: Manitz, Finsterwald & Partner GbR

(56) Entgegenhaltungen:
- EP-A2- 1 892 427
- DE-A1-102009 009 482
- US-A- 3 213 914

## Beschreibung

Die vorliegende Erfindung betrifft ein selbststanzendes Mutterelement das zum Einpressen in ein Blechteil ausgelegt ist, wobei das Mutterelement entsprechend dem Oberbegriff vom Anspruch 1 folgende Merkmale aufweist: ein einen Flansch bildendes Kopfteil, eine mittlere Gewindebohrung im Kopfteil, die zur Aufnahme eines Bolzenelements ausgelegt ist und eine mittlere Längsachse aufweist, eine in einer Ebene zumindest im Wesentlichen senkrecht zur mittleren Längsachse stehende am Flansch ausgebildete Blechanlagefläche sowie einen sich auf der Seite der Blechanlagefläche vom Kopfteil in Richtung der Längsachse weg erstreckenden Stanzabschnitt. Ferner betrifft die vorliegende Erfindung ein Zusammenbauteil bestehend aus einem derartigen Mutterelement, das an einem Blechteil angebracht ist.

Ein Funktionselement der eingangs genannten Art ist aus der US-A-3,213,914 bekannt. Die EP-A-1 892 427 beschreibt ein Befestigungselement mit Merkmalen von Anspruch 1 mit der entscheidenden Ausnahme, dass es nicht selbststanzend ausgeführt ist.

Auf dem Gebiet der Verbindungselemente, die bei der Anfertigung von Blechteilen an diesen maschinell angebracht werden, unterscheidet man zwischen Einpresselementen einerseits und Nietelementen andererseits. Einpresselemente zeichnen sich dadurch aus, dass sie bei Anbringung an ein Blechteil zumindest nicht absichtlich verformt werden, sondern das Blechteil selbst wird verformt und in Eingriff mit Formmerkmalen des Einpresselementes gebracht, wodurch das Einpresselement verdrehsicher und auspresssicher am Blechteil befestigt wird. Bei Nietelementen wird der Nietabschnitt des Elements bei der Anbringung am Blechteil absichtlich verformt, meistens um ein Nietbördel auszubilden, wodurch das Blechteil zwischen Nietbördel und einem Flanschteil eingefangen wird, um auch hier eine verdrehsichere und auspresssichere Verbindung zu erreichen.

Sowohl Einpresselemente als auch Nietelemente kennt man ferner in der Form von selbststanzenden Elementen. Die Bezeichnung selbststanzend ist so zu verstehen, dass das entsprechende Element sein eigenes Loch im Blechteil stanzt, natürlich nur dann, wenn eine ausreichende Kraft auf das selbststanzende Element ausgeübt wird, beispielsweise von einer Presse, von einem Roboter oder einer kraftbetätigten Zange, die das selbststanzende Element gegen das Blechteil presst, und das Blechteil auf der dem Element abgewandten Seite auf eine entsprechende Matrize abgestützt wird.

Es war bisher im Fahrzeugbau üblich, selbststanzende Elemente mit Blechteilen zu verwenden, die eine Festigkeit unterhalb etwa 300 MPa aufweisen. Die selbststanzenden Elemente, die dann zur Anwendung gelangen, haben üblicherweise eine Festigkeit im Bereich zwischen 700 und 900 MPa und in Ausnahmefällen bis zu etwa 1250 MPa, was durchaus ausreicht, um bei der Anbringung des Verbindungselements am Blechteil ein Loch im Blechteil auszustanzen, insbesondere dann, wenn das Blechteil eine Dicke von unterhalb etwa 3 mm aufweist. Festigkeiten der Elemente bis zu etwa 850 MPa gelten beispielsweise für Elemente der Klasse 8, während höhere Festigkeiten für Elemente der Klassen 10 und 12 gelten, die normalerweise eine Wärmebehandlung und/oder eine bestimmte Materialauswahl der entsprechenden Elemente erforderlich machen.

Bei den verwendeten Verbindungselementen hat das Material des Verbindungselementes im Rohzustand üblicherweise eine Festigkeit von etwa 380 MPa. Diese Festigkeit erhöht sich aber auf Werte im Bereich zwischen 700 und 900 MPa alleine durch die Kaltverformung, die gebraucht wird, um ausgehend von einem Stabmaterial ein Befestigungselement durch Kaltschlagen zu erzeugen.

Für manche Zwecke werden Verbindungselemente benötigt, die eine höhere Festigkeit als 900 MPa aufweisen. Diese werden dann aus einem Material hergestellt, das sich durch eine Wärmebehandlung härten lässt, wodurch eine höhere Festigkeit erreicht wird. Solche Wärmebehandlungen sind jedoch in vielen Fällen unerwünscht. Sie stellen ein fremdes Verfahren im Vergleich zu der Herstellung der Verbindungselemente mittels Kaltschlagen dar und werden üblicherweise nicht einmal in der gleichen Fabrik durchgeführt, in der die Verbindungselemente hergestellt werden, wodurch ein erheblicher Zeit- und Kostenaufwand betrieben werden muss, um wärmebehandelte Elemente höherer Festigkeit zu erzeugen.

Auf der anderen Seite werden im Fahrzeugbau zunehmend Bleche mit höherer Festigkeit verwendet und teilweise auch wärmebehandelte Blechteile, die höhere Festigkeiten oberhalb des üblichen Festigkeitsbereiches von 700 bis 900 MPA für Verbindungselemente aufweisen. Solche Blechteile mit höherer Festigkeit machen es einerseits möglich, mit dünneren Blechen zu arbeiten, wodurch Gewicht gespart werden kann, machen es aber andererseits extrem schwierig, mit selbststanzenden Elementen zu arbeiten.

Der vorliegenden Erfindung liegt die Aufgabe zugrunde, ein selbststanzendes Mutterelement vorzusehen, das mit einer Festigkeit im Bereich zwischen 700 und 900 MPa selbststanzend in Blechteilen (sowohl Blechteilen mit geringen Festigkeiten bis 300 MPa als auch solche mit höherer Festigkeit oberhalb von 300MPa bis über 1600MPa) eingebracht werden kann. Es handelt sich bei solchen erfindungsgemäßen Mutterelementen weitestgehend um Einpresselemente. Ferner soll das erfindungsgemäße Mutterelement bzw. das erfindungsgemäße Zusammenbauteil relativ preisgünstig herstellbar sein.

Zur Lösung dieser Aufgabe wird bei einem Mutterelement der eingangs genannten Art erfindungsgemäß vorgesehen, dass zum selbststanzenden Anbringen des eine Festigkeit aufweisenden Mutterelements in ein Blechteil höherer Festigkeit, das Mutterelement derart ausgelegt ist, dass der Stanzabschnitt in die Blechanlagefläche unmittelbar übergeht und dass der Stanzabschnitt eine Stanzkante an seinem freien Stirnseite aufweist, wobei die Stanzkante von der Blechanlagefläche durch eine Umfangsfläche mit einer axialen Höhe beabstandet ist, die mindestens 30% und vorzugsweise mindestens 50 % der Blechdicke entspricht, wobei die radiale Wanddicke des Stanzabschnitts im Bereich seiner freien Stirnseite (bei nicht quadratischen oder kreisförmigen Stanzabschnitten die kleinste radiale Wanddicke) von der Außenseite bis zum Nenndurchmesser des Gewindes einer Dicke im Bereich des 1,2- bis 1,8- und vorzugsweise 1,5-fachen der vorgesehenen Blechteildicke entspricht.

Das entsprechende Zusammenbauteil bestehend aus dem selbststanzenden Mutterelement und einem Blechteil zeichnet sich dadurch aus, dass das Blechteil ein Stanzloch mit einer Form entsprechend der Form des Stanzabschnitts aufweist, dass das Material des Blechteils auf der der Blechanlagefläche abgewandten Seite des Blechteils benachbart zum Stanzabschnitt eine den Stanzabschnitt umgebende Vertiefung aufweist, und dass sich das Material des Lochrandes aufgrund der Ausbildung der Vertiefung in eine Einschnürung bzw eine Rille des Mutterelements hinein erstreckt, die sich radial in den Stanzabschnitt ausbildet.

Es ist nämlich erfindungsgemäß überraschend festgestellt worden, dass bei geeigneter Ausbildung des Stanzabschnitts, in dem Sinne, dass dieser mit einem zumindest im Wesentlichen zylindrischen Abschnitt mit einer axialen Höhe versehen wird, die mindestens 50 % der Blechdicke, vorzugsweise mehr, entspricht, auch dann im Stande ist, ein Loch im Blechteil zu stanzen, wenn das Blechteil eine höhere Festigkeit im Bereich von größer als 900 bis über 1600 MPa und vorzugsweise von 1500 MPa aufweist.

Die Erfindung erschöpft sich aber nicht nur im Ausstanzen des entsprechenden Stanzloches, sondern das Blechteil muss nach Anfertigung des Stanzloches am Mutterelement so befestigt werden, dass das Mutterelement verdrehsicher und auspresssicher am Blechteil anliegt. Besonders überraschend ist, dass das Mutterelement in der gelieferten Form vor der Anbringung an das Blechteil keine Merkmale wie eine Hinterschneidung im Stanzabschnitt aufweist, die die Auspresssicherheit bzw. den Auspresswiderstand sicherstellen könnten. Nichtsdestotrotz wird eine hochwertige Auspresssicherheit erreicht, und zwar deshalb, weil bei der Ausschneidung des Stanzbutzens und/oder der Anbringung an das Blechteil, das im Allgemeinem den doppelten Festigkeitswert im Vergleich zum Mutterelement aufweist, das Blechmaterial das weichere Mutterelement verformt und sich in den Körper des Mutterelements hinein erstreckt und sich dort in einer ringförmigen Rille befindet, die sich radial in den Stanzabschnitt hinein erstreckt und unter dem Druck des Blechmaterials, der durch die Matrize erzeugt wird, sich dort ausbildet. Dabei kann die Rille bzw. die entsprechende Einschnürung des Stanzabschnitts durch die Kräfte die herrschen bei dem Durchstanzen des Blechteils mit dem Mutterelement und mit der Hilfe der Matrize und/oder bei der Ausbildung der Ringvertiefung in der der Blechanlagefläche abgewandten Seite des Blechteils durch die Matrize entstehen. Besonders überraschend ist, dass eine solche Verformung des Mutterelements, d.h. die Ausbildung einer Rille die sich radial in den Stanzabschnitt hinein erstreckt, auch dann zu erreichen ist, wenn das Blechteil eine geringere Festigkeit als das Element aufweist.

Es wurde festgestellt, dass es bei höherfesten oder dickeren Blechen (auch solche mit einer geringeren Festigkeit als das Element selbst) durchaus möglich ist, mittels einer Matrize mit einer entsprechenden Ringnase das Blechmaterial im Bereich des Lochrandes so zu verformen, dass eine Vertiefung benachbart zum Stanzabschnitt entsteht. Ferner entsteht aufgrund der Verdrängung des Blechmaterials und einer gleichzeitig versuchten radialen Erweiterung des Stanzabschnittes, die aufgrund der Stauchung bei dem Durchstanzen des Blechmaterials entsteht, eine erhebliche Lochlaibung, die für eine Verdrehsicherung sorgt.

Sollte eine höhere Verdrehsicherheit gewünscht werden, kann dies auf verschiedene Art und Weise realisiert werden. Ein Möglichkeit besteht darin, das Blechteil und/oder das Funktionselement mit einer Klebeschicht zu versehen, beispielsweise eine solche, die bei höheren Drücken aushärtet. Entsprechend höhere Drücke entstehen bei der Anbringung des Befestigungselements am Blechteil, wodurch die Verdrehsicherung dann erreicht bzw. begünstigt wird.

Eine andere Möglichkeit besteht darin, den Stanzabschnitt in Draufsicht polygonal mit gerundeten Ecken an den Übergangen von einer Seite des Polygons zur nächsten zu gestalten. Durch die polygonale Form des Stanzabschnitts wird eine sehr hohe Verdrehsicherung gewährleistet.

Auch das Kopfteil kann eine der polygonalen Form des Stanzabschnitts entsprechende polygonale Form aufweisen, ebenfalls mit gerundeten Ecken. Die gerundeten Ecken sind deshalb wichtig, weil gerade bei höherfesten Blechteilen die scharfen Kanten, die sonst an den Übergängen von einer Seite des Polygons zur nächsten entstehen würden, zu einer erheblichen, nicht zu unterschätzenden Gefahr führen würden, dass sich Ermüdungsrisse im Blechteil ausbilden und die Verbindung, die mit dem Mutterelement angestrebt wird, im Betrieb versagt. Durch die gerundete Form des Kopfteils wird darüber hinaus sichergestellt, dass auf der radial äußeren Seite der Blechanlagefläche ebenfalls keine spannungserhöhenden Verformungen des Blechteils auftreten, wodurch die Lebensdauer herabgesetzt werden könnte.

Um diese polygonale Form des Stanzabschnitts bzw. des Kopfteils vernünftig auszunutzen, soll sie aus der Gruppe quadratisch, rechteckig, fünfeckig oder sechseckig ausgewählt werden.

In einer Ausführung, bei der der Stanzabschnitt eine polygonale Form aufweist, besteht auch die Möglichkeit, das Kopfteil in Draufsicht kreisförmig zu gestalten, sofern die Ausrichtung des Kopfteils um die Längsachse des Elements gewährleistet werden kann, da bei einer polygonalen Form des Stanzabschnitts die Stanzmatrize eine entsprechende Form bzw. eine entsprechende Stanzöffnung aufweisen müsste und das Element muss dann zwangsläufig mit der Matrize winkelmäßig ausgerichtet werden. Eine solche Ausrichtung des Elements könnte beispielsweise über zwei konusförmige Vertiefungen in der dem Blechteil abgewandten Stirnseite des Kopfteils erreicht werden, wobei entsprechende konusförmige Vorsprünge am Stempel des Setzkopfs in diese konusförmigen Vertiefungen eingreifen und für eine entsprechende Positionierung des Elements sorgen könnten. Auch kämen ein oder zwei Nuten oder Rippen am Umfang des Kopfteils als Ausrichtungshilfe in Frage.

Es besteht aber auch die Möglichkeit, das gesamte Mutterelement so zu gestalten, dass der Stanzabschnitt und das Kopfteil in Draufsicht zumindest im Wesentlichen kreisrund sind. Es müssen dann andere Maßnahmen getroffen werden, um die Verdrehsicherung sicherzustellen. Dies kann dann beispielsweise dadurch erfolgen, dass Verdrehsicherungsnasen vorgesehen sind, die die Form von sich in axialer Richtung erstreckenden Rippen am Stanzabschnitt aufweisen

Es soll an dieser Stelle zum Ausdruck gebracht werden, dass mittels der vorliegenden Erfindung eine neue Gattung von Einpresselementen geschaffen worden ist, bei der das Element und das Blechteil bei der Anbringung des Elements an das Blechteil verformt werden und zwar nicht eine Verformung des Elements, die durch das Abschälen eines Ringkragens wie in der US-Patentschrift US-A-3,213,914 beschrieben ist sondern eine Verformung des Elements im Sinne der Ausbildung einer Einschnürung des Stanzabschnittes oder der Ausbildung einer Rille um den Stanzabschnitt herum, die durch Stauchung des Elements sei es während des Durchstanzens des Blechteils und/oder durch den Würgegriff des Blechmaterials d.h. durch die klemmende Ringspannung des Blechmaterials erfolgt.

Bevorzugte Ausführungsformen des Mutterelement bzw. des Zusammenbauteils der vorliegenden Erfindung gehen aus den Unteransprüchen sowie aus der noch folgenden Beschreibung von Beispielen anhand der beifügten Zeichnungen hervor, in welchen jeweils maßstabsgetreu folgendes gezeigt ist:
- Fig. 1A-1C: Darstellungen einer ersten erfindungsgemäßen Ausführung eines Mutterelements in einer perspektivischen Darstellung (Fig. 1A), eine axiale Ansicht der in Fig. 1A linken Stirnseite des Elements (Fig. 1B) und eine Seitenansicht des erfindungsgemäßen Elements teilweise in einem axialen Halbschnitt (Fig. 1C),
- Fig. 2A: die Werkzeuge, die zur Anbringung des erfindungsgemäßen Mutterelements gemäß Fig. 1A in ein Blechteil verwendet werden,
- Fig. 2B: eine Ansicht entsprechend der Fig. 1C, jedoch mit Mutterelement am Blechteil befestigt,
- Fig. 2C: eine vergrößerte Darstellung des Formschlusses zwischen dem erfindungsgemäßen Mutterelement und dem Blechteil gemäß Fig. 2B und
- Fig. 3A, 3B: die Anordnung des Mutterelements gemäß Fig. 1A-1C in bzw. an einer Sicke im Blechteil.

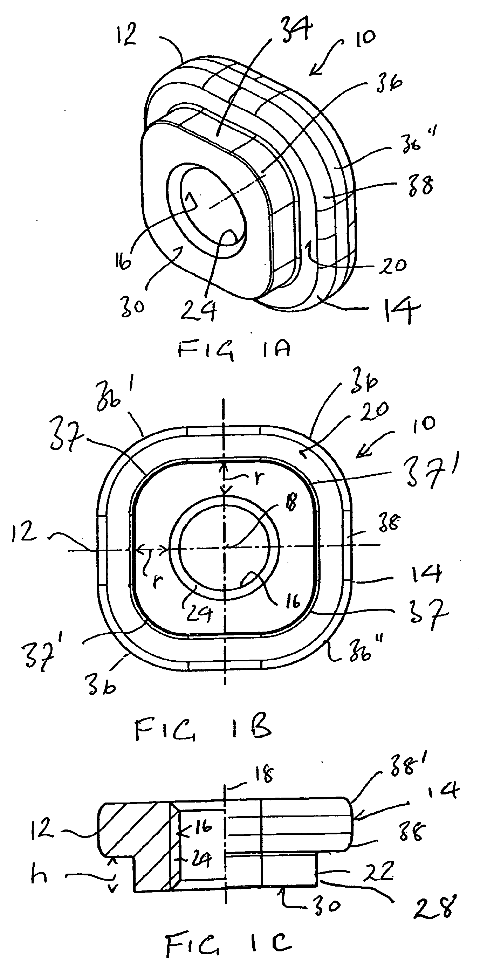

Die Fig. 1A bis 1C zeigen zunächst eine erste Ausführungsform eines erfindungsgemäßen selbststanzenden Mutterelements 10 mit einer Festigkeit im Bereich zwischen 700 und 900 MPa, in Ausnahmefällen bis etwa 1250 MPa das zum Einpressen in ein Blechteil höherer Festigkeit bis 1500MPa und gar über 1600MPa ausgelegt ist, aber auch mit Blechteilen geringerer Festigkeiten und schließlich auch mit Blechteilen mit Festigkeiten unter 300MPa verwendet werden kann, wobei das Mutterelement folgende Merkmale aufweist:

Ein einen Flansch 12 bildendes Kopfteil 14, eine mittlere Bohrung 16 im Kopfteil 14, die zur Aufnahme eines Bolzenelements (nicht gezeigt) ausgelegt ist und eine mittlere Längsachse 18 aufweist, eine in einer Ebene zumindest im Wesentlichen senkrecht zur mittleren Längsachse 18 stehende am Flansch 12 ausgebildete Blechanlagefläche 20 sowie einen sich auf der Seite der Blechanlagefläche vom Kopfteil 14 in Richtung der Längsachse 18 weg erstreckenden Stanzabschnitt 22. Das Bolzenelement kann beispielsweise ein Gewindebolzen sein, weshalb das Mutterelement 10 hier mit einem Gewindezylinder 24 versehen ist, d.h. die Bohrung 16 ist eine Gewindebohrung.

Für das selbststanzende Anbringen des Mutterelements 10 in ein Blechteil insbesondere jedoch nicht ausschließlich in ein Blechteil höherer Festigkeit ist das Mutterelement derart ausgelegt, dass der Stanzabschnitt 22 in die Blechanlagefläche unmittelbar übergeht und dass er ferner eine Stanzkante 28 an seinem freien Stirnseite 30 aufweist, wobei die Stanzkante 28 von der Blechanlagefläche 20 durch eine Umfangsfläche 34 mit einer axialen Höhe h beabstandet ist, die mindestens 50 % der Blechdicke entspricht.

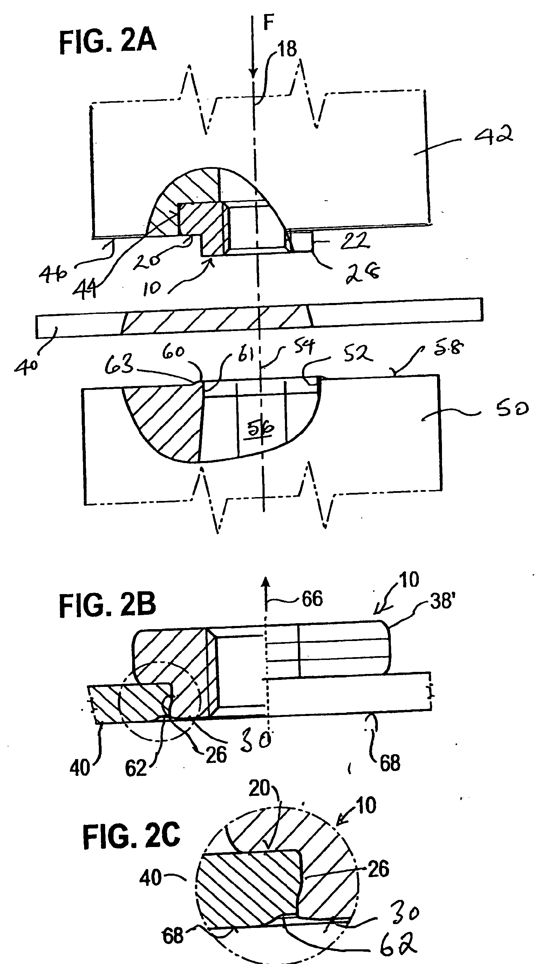

Das selbststanzende Mutterelement 10 der Fig. 1A bis 1C sowie alle weiteren hier offenbarten Mutterelemente entsprechend der vorliegenden Lehre sind insbesondere jedoch nicht ausschließlich zur Anwendung mit Blechteilen mit einer Festigkeit im Bereich von größer als 900 bis über 1600 MPa, vorzugsweise von etwa 1500 MPa ausgelegt. Wichtig ist, dass genügend Material hinter, d.h. auf der Kopfteilseite der Stanzkante 28 im Bereich der genannten Umfangsfläche 34 vorhanden ist, damit der Stanzabschnitt die erforderliche Stanzarbeit leisten kann. Eine gewisse Verformung des Stanzabschnitts 22 ist jedoch möglich und sogar erwünscht, damit das höherfeste Blechmaterial in den Stanzabschnitt zur Ausbildung einer ringförmigen Einschnürung bzw. einer ringförmigen Rille 26 (Fig. 2C) hinein gedrückt werden kann. Im Allgemeinen sollte der Stanzabschnitt aber so ausgelegt sein, d.h. mit einer radialen Dicke und axialer Höhe h, dass unter den Einstanzkräften keine unerwünschte Verformung (außer der Rille bzw. der Einschnürung 26) eintritt. In der Praxis bedeutet dies, dass die axiale Höhe h und die radiale Dicke r des Stanzabschnitts wie folgt bemessen werden sollen:
Die axiale Höhe der genannten Umfangsfläche soll mindestens 30% und vorzugsweise mindestens 50 % der Blechdicke entsprechen, wobei axiale Höhen bis zu 100% der Blechteildicke und sogar darüber hinaus möglich sind, wenn das Element an das Blechteil innerhalb einer Sicke angebracht wird. Wichtig ist im Regelfall, dass die freie Stirnseite des Stanzabschnitts nicht über die dem Kopfteil abgewandten Seite des Blechteils vorsteht, wobei üblicherweise die freie Stirnseite bis etwa 0.02 mm gegenüber der genannten Seite des Blechteils zurückversetzt sein soll. Hierdurch kann ein weiteres Bauteil an das Blechteil direkt angeschraubt werden, und es wird die erwünschte Direktklemmung des Bauteils mit dem Blechteil erreicht. Dies bedeutet aber, dass die axiale Höhe des Stanzabschnitts, d.h. der Umfangsfläche, nicht größer als 100 % der Blechteildicke sein darf, es sei denn, das Mutterelement ist innerhalb einer Sicke am Blechteil angebracht. In diesem Fall ermöglicht die Wahl der axialen Tiefe der Sicke stets eine Anordnung, bei der die freie Stirnseite des Stanzabschnitts des Mutterelements stets von der Ebene der dem Kopfteil des Mutterelements abgewandten Seite des Blechteils außerhalb der Sicke zurücksteht, und zwar unabhängig von der jeweiligen Blechteildicke.

Die radiale Wanddicke r des Stanzabschnitts im Bereich seiner freien Stirnseite von der Außenseite bis zum Nenndurchmesser des Gewindes (d.h. dem Außendurchmesser des Gewindes, d.h. bei einem M8-Gewinde ein Durchmesser von 8 mm und ein Radius vom 4 mm) liegt im Bereich zwischen dem 1,2- bis 1,8- und vorzugsweise dem 1,3- und 1,7- und insbesondere bei etwa dem 1,5-fachen der vorgesehenen Blechteildicke.

Wird die radiale Wanddicke r zu klein gewählt, so besteht die Gefahr der unerwünschten Verformung des Stanzabschnitts, insbesondere bei toleranzmäßig ungünstigen Umständen. Wird er dagegen zu groß gewählt, so wird das Mutterelement unnötig schwer. Der Wert von 1,5-mal die Blechteildicke hat sich als günstig erwiesen.

Bei nicht quadratischen oder kreisförmigen Stanzabschnitten ist die Abmessung r als die kleinste radiale Wanddicke zu verstehen, wie in den Fig. eingezeichnet, wobei die Abmessung r dann auch etwas kleiner als 1,5-mal die Blechteildicke, beispielsweise 1,2-mal die Blechteildicke, gewählt werden kann.

Die Fig. 2A zeigt schematisch die Werkzeuge, die verwendet werden, um das Mutterelement gemäß Fig. 1A bis 1C oder vergleichbare Elemente in ein Blechteil 40 einzustanzen. Das Werkzeug besteht aus einem Setzkopf 42, der mit einer Aufnahme 44 versehen ist, die der Kopfform des Mutterelements 10 angepasst ist, so dass der Stanzabschnitt 22 vor der unteren Stirnseite 46 des Setzkopfes 42 vorsteht. Die Blechanlagefläche 20 des Mutterelements 10 liegt in der gleichen Ebene wie die Stirnseite 46 des Setzkopfes 42.

Setzköpfe dieser Art sind bestens bekannt und werden üblicherweise für die automatische Zufuhr von Mutterelementen aus einem Vorrat in die Aufnahme 44 ausgelegt. Beispiele für solche Setzköpfe sind unter anderem in der europäischen Patentschrift EP-755749 B2 der vorliegenden Anmelderin enthalten. Ferner könnte beispielsweise ein Setzkopf zur Anwendung gelangen, wie er in GB-A-934101 beschrieben ist.

Unterhalb des Blechteils 40 befindet sich eine Matrize 50 mit einer mittleren Öffnung 52, deren Querschnittsform der des Stanzabschnitt 22 entspricht, wobei die Matrizenöffnung 52 geringfügig größer ausgeführt ist als der Stanzabschnitt 22, damit dieser mit geringem Spiel in die Öffnung 52 hineinpasst. Beispielsweise könnte die Öffnung 52 im Vergleich zum Stanzabschnitt 22 etwa 0,01 mm im Durchmesser bzw. in ihrer Querabmessung größer sein. Die Öffnung 52 hat eine mittlere Längsachse 54, die mit der mittleren Längsachse 18 des Mutterelements 10 fluchtet.

Da die Öffnung 52 der Matrize den Stanzabschnitt 22 mindestens im Bereich dessen Stirnkante aufnehmen soll, muss die Matrize im entsprechenden Werkzeug der Presse entsprechend der Ausrichtung des Mutterelements 10 im Setzkopf ausgerichtet sein.

Ferner soll erwähnt werden, dass die Passage 56 unterhalb der Öffnung 52 von dieser weg divergiert, damit der Stanzbutzen, der entsteht, wenn das Mutterelement 10 durch eine sich in Pfeilrichtung F wirkende Kraft gegen das Blechteil und gegen die Matrize gedrückt wird, wodurch ein Stanzbutzen mittels der Zusammenarbeit zwischen dem Stanzabschnitt 22 und der Matrize 50 aus dem Blechteil herausgestanzt wird, schließlich über die divergierende Passage 56 entsorgt wird. In dieser Figur kann ein so genannter Niederhalter (nicht gezeigt) im Setzkopf 42 integriert werden. Dieser Niederhalter hat die Aufgabe, vor dem Durchstanzen des Blechteils 40 dieses fest gegen die Stirnseite 58 der Matrize bzw. gegen das die Matrize 50 aufnehmende Werkzeug zu drücken. Der Niederhalter kann beispielsweise durch einen zylindrischen Teil gebildet werden der den gezeigten Körper des Setzkopfes 42 umgibt und nach unten vorgespannt sein kann.

Üblicherweise wird die Matrize 50 im unteren Werkzeug einer Presse aufgenommen, und zwar so, dass die obere Stirnseite 58 in Fig. 2A bündig mit der Oberfläche des unteren Werkzeugs liegt. Der Setzkopf 42 wird dann entweder an einer Zwischenplatte der Presse oder am oberen Werkzeug der Presse montiert. Es ist genauso möglich, die Matrize 50 in der Zwischenplatte einer Presse unterzubringen, und den Setzkopf 42 dann im oberen Werkzeug der Presse anzuordnen. Ferner sind auch umgekehrte Anordnungen möglich, bei denen die Matrize 50 oberhalb des Setzkopfs 42 angeordnet ist, beispielsweise so, dass der Setzkopf 42 nach oben weisend im unteren Werkzeug der Presse oder in der Zwischenplatte der Presse angeordnet ist, während die Matrize dann folgerichtig auch in umgekehrter Position gegenüber Fig. 2A in der Zwischenplatte der Presse bzw. im oberen Werkzeug der Presse anzuordnen wäre.

Schließlich ist es nicht erforderlich, eine Presse zum Einstanzen des Mutterelements 10 zu verwenden, sondern diese Funktion könnte von einem mit entsprechenden Werkzeugen ausgestatteten Roboter oder von einer kraftbetätigten Zange übernommen werden.

Um die Öffnung 52 der Matrize herum befindet sich eine Nase 60, die in Draufsicht eine quadratische Form mit gerundeten Ecken entsprechend der Umrissform des Stanzabschnitts 22 aufweist. Die Nase 60 hat eine senkrechte Flanke 61, die die Öffnung 52 umschließt und eine Schrägflanke 63.

Beim Schließen der Presse bzw. des Werkzeugs gemäß Fig. 2A stanzt der Stanzabschnitt 22 einen Stanzbützen aus dem Blechteil 40, der dann durch die Passage 56 der Matrize hindurch fällt und aus der Presse entsorgt werden kann. Die Durchstanzung des Blechteils erfolgt aufgrund von Scherkräften, die zwischen der Stanzkante 28 des Stanzabschnitts 22 und der Begrenzung der Öffnung 52 an der Oberseite der Matrize entstehen.

Aufgrund der enormen Kraft beim Durchstanzen des Blechteils wird nicht nur das Blechteil verformt, sondern auch der Stanzabschnitt 22. Hierdurch wird die Stanzkante 28 nach oben gedrückt und der Stanzabschnitt 22 nach außen. Oberhalb dieser Verformung entsteht somit eine Hinterschneidung in Form einer Rille 26.

Während des Durchstanzens des Blechteils drückt auch die Ringnase 60 gegen die Unterseite des Blechteils und bildet dort eine Vertiefung 62, die sich um den Stanzabschnitt 22 im Bereich dessen Stirnkante herum erstreckt. Das Material, das durch die Ausbildung der Vertiefung 62 verdrängt wird, wird aufgrund der erheblichen Kompression innerhalb der Presse gezwungen, in die Rille 26 am Stanzabschnitt 22 hineinzufließen, wodurch das Blechteil 40 formschlüssig mit dem Mutterelement 10 verbunden ist. Darüber hinaus sorgt die Nase 60 dafür, dass der Butzen sauber vom restlichen Blechmaterial getrennt wird, ohne dass der Stanzabschnitt 22 aus der unteren Ebene des Bleches herausragen muss, sondern um etwa 0,2 mm zurück bleibt.

Das Mutterelement 10 ist verdrehsicher um die Achse 18 im Blechteil gehalten, da hier die quadratische Form des Stanzabschnitts 22, der in der formangepassten Ausstanzöffnung im Blechteil 40 angeordnet ist, eine gegenseitige Verdrehung des Blechteils und des Mutterelements verhindert. Durch das Material, das sich in der Rille 26 befindet, wird nicht nur eine hohe Lochlaibung zwischen dem Blechteil und dem Mutterelement erzeugt, die auch zur Verdrehsicherung beiträgt, sondern es wird auch ein Formschluss derart erzeugt, dass das Auspressen des Mutterelements aus dem Blechteil 40 in Auspressrichtung 66 nicht möglich ist oder nur bei Anbringung von erheblichen zerstörerischen Kräften. Die Gefahr, dass das Mutterelement 10 nach unten in die entgegengesetzte Richtung (entgegengesetzt zu der Pfeilrichtung 66) gedrückt wird, ist deshalb nicht gegeben, weil die Blechanlagefläche 20 vollflächig auf der Oberfläche des Blechteils 40 sitzt und dies verhindert.

Die Überlappung im Bereich der Rille 26 des Stanzabschnitts ist in einem großen Maßstab in Fig. 2C gezeigt. Im Betrieb wird ein weiteres Bauteil an der Unterseite 68 des Blechteils 40 in Fig. 2A angebracht, und zwar mittels eines Schraubbolzens, dessen Gewinde von unten in Fig. 2B kommend in das Gewinde 24 hineingeschraubt wird. Man sieht aus den Zeichnungen der Fig. 2B und 2C, dass die untere Stirnseite 30 des Stanzabschnitts 22 gegenüber der Unterseite 68 des Blechteils leicht zurückversetzt ist. Dies bedeutet, dass in der Anschraubsituation, d.h. wenn ein weiteres Bauteil mittels des oben genannten Schraubbolzens an dem Blechteil 40 befestigt wird, die Stirnseite 30 des Mutterelements so positioniert ist, dass das Blechteil 40 und das weitere Bauteil wenigstens im Bereich des Mutterelements 10 flächig aneinander liegen und gegeneinander im Sinne einer hochwertigen Schraubverbindung verspannt werden können.

Das selbststanzende Mutterelement gemäß der vorliegenden Lehre ist vorzugsweise so ausgelegt, dass der Stanzabschnitt in Draufsicht polygonal ist mit gerundeten Ecken 37 bzw. 37' an den Übergängen von einer Seite des Polygons zur nächsten. Dies gilt in der gezeigten Ausführungsform gemäß Fig. 1A bis 1C auch für die Formgebung des Kopfteils 14, d.h. dieser ist auch mit gerundeten Ecken 36 bzw. 36' an den Übergängen von einer Seite des Polygons zur nächsten. Im Beispiel der Fig. 1A bis 1C ist die polygonale Form des Stanzabschnitts 22 und des Kopfteils 14 quadratisch.

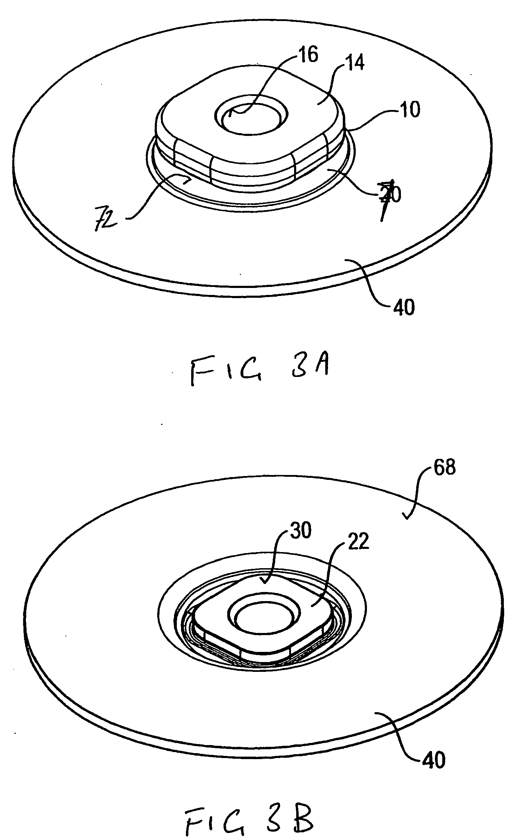

Die Fig. 3A und 3B zeigen die Möglichkeit der Anordnung des Mutterelements am Blechteil im Bereich einer Sicke 70. Hier liegt die Blechanlagefläche 20 des Mutterelements 10 auf der Oberseite 72 der Bodenfläche de Sicke 70 des Blechteils 40 in Fig. 3A. Aus Fig. 3B, d.h. in der Darstellung auf der Unterseite des Blechteils gemäß Fig. 3A, ist es ersichtlich, dass die Stirnseite 30 des Mutterelements 10 nicht über die in Fig. 3B obere Blechseite 68 des Blechteils vorsteht. Aus diesen Zeichnungen gemäß Fig. 3A und 3B ist ersichtlich, dass der Stanzabschnitt eine Länge aufweisen kann, die die Blechdicke übersteigt, ohne dass die freie Stirnseite 30 des Stanzabschnitts 22 über die Unterseite 68 des Blechteils außerhalb der Sicke 70 hinausragt.

Ferner ergibt sich aus den Zeichnungen insgesamt, dass der Kopfteil 14 des Mutterelements mit gerundeter Begrenzungsflächen wie 36, 36', 38 und 38' versehen ist, die ohne weiteres während der Herstellung mittels eines Kaltschlagverfahrens erzeugt werden können und welche dafür sorgen, dass keine scharfe Kanten zu Ermüdungsrissen im benachbarten Bereich des Bauteils bzw. des Blechteils 40 führen

In allen Ausführungen ist das Material des Blechteils formschlüssig in die sich ausbildende Rille 26 aufgenommen. Die sonst verwendeten Bezugszeichen sind wie bisher zu verstehen, d.h. die bisherige Beschreibung gilt genauso für Formmerkmale, die mit dem gleichen Bezugszeichen gekennzeichnet sind.

Wenn das Mutterelement mit Verdrehsicherungsnasen vorgesehen ist, die die Form von sich in axialer Richtung erstreckenden Rippen am Stanzabschnitt aufweisen, die an der Umfangsfläche angeordnet sind, sind im fertig gestellten Zusammenbauteil Verdrehsicherungsvertiefungen entsprechend der Form der Verdrehsicherungsrippen im Lochrand des Blechteils ausgebildet.

Das Ergebnis der Anbringung eines Mutterelementes 10 gemäß der vorliegenden Lehre ist ein Zusammenbauteil bestehend aus dem selbststanzenden Mutterelement 10 und einem Blechteil 40 und zeichnet sich dadurch aus, dass das Blechteil 40 ein Stanzloch mit einer Form entsprechend der Form des Stanzabschnitts 22 aufweist, dass das Material des Blechteils 40 auf der der Blechanlagefläche 20 abgewandten Seite 68 des Blechteils benachbart zum Stanzabschnitt eine den Stanzabschnitt 22 umgebende Vertiefung 62 aufweist, und dass sich das Material des Lochrandes aufgrund der Ausbildung der Vertiefung 62 in das Mutterelement 10 hineinerstreckt und sich dort in einer Rille 26 befindet, die sich radial in den Stanzabschnitt 22 und evtl. auch axial in den Kopfteil 14 im Bereich des Übergangs von der Umfangsfläche 34 in die Blechanlagefläche 20 hineinerstreckt.

Besonders günstig ist es, wenn das Blechteil 40 im Bereich der Anbringung des Mutterelements und auch radial außerhalb dieses Bereichs in einer Ebene liegt und die freie Stirnseite 30 des Stanzabschnitts 22 von der der Blechanlagefläche abgewandten Seite zurückversetzt ist.

Es sind an dieser Stelle einige Anmerkungen angebracht. Der Stanzabschnitt 22 bzw. die Rille 26 können in Draufsicht eine Form aufweisen, die aus der Gruppe quadratisch, rechteckig, fünfeckig oder sechseckig ausgewählt ist. Ferner kann gemäß einer anderen Ausführungsform des Stanzabschnitts 22, dieser wie auch der Kopfteil 14 einen kreisrunden Querschnitt aufweisen.

Die Umfangsfläche 34 kann in beliebigen radialen Ebenen, die die Längsachse 18 einschließen, entweder einen achsparallelen Verlauf oder einen zu der Längsachse eingeschlossenen Winkel von größer als 0° bis 5° aufweisen. Die Aussage, dass der Stanzabschnitt 22 unmittelbar in die Blechanlagefläche übergeht, schließt nicht aus, dass dort ein Radius oder eine Fase vorliegt, sondern vielmehr, dass im Mutterelement selbst vor der Anbringung an das Blechteil keine Rille 26 vorgesehen ist. Der Stanzabschnitt kann allerdings so gestaltet werden, dass er mit einem eingeschlossenen Winkel im Bereich zwischen 0° und 5° bezogen auf die mittlere Längsachse 18 in Richtung von dem Kopfteil 14 zur freien Stirnseite 30 gehend divergiert.

Bei allen Ausführungsformen können als Beispiel für den Werkstoff der Befestigungselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654.

## Patentansprüche

1. Selbststanzendes Mutterelement (10), das zum Einpressen in ein Blechteil (40) ausgelegt ist, wobei das Mutterelement folgende Merkmale aufweist:
ein einen Flansch (12) bildendes Kopfteil (14), eine mittlere Gewindebohrung (16) im Kopfteil, die zur Aufnahme eines Bolzenelements ausgelegt ist und eine mittlere Längsachse (18) aufweist, eine in einer Ebene zumindest im Wesentlichen senkrecht zur mittleren Längsachse stehende am Flansch (12) ausgebildete Blechanlagefläche (20) sowie einen sich auf der Seite der Blechanlagefläche vom Kopfteil in Richtung der Längsachse weg erstreckenden Stanzabschnitt (22),
**dadurch gekennzeichnet, dass** zum selbststanzenden Anbringen des Mutterelements in ein Blechteil (40) höherer Festigkeit das Mutterelement derart ausgelegt ist, dass der Stanzabschnitt (22) unmittelbar in die Blechanlagefläche (20) übergeht und dass der Stanzabschnitt (22) eine Stanzkante (28) an seiner freien Stirnseite aufweist, wobei die Stanzkante (28) von der Blechanlagefläche (20) durch eine Umfangsfläche (34) mit einer axialen Höhe beabstandet ist, die mindestens 30 % und vorzugsweise mindestens 50 % der Blechdicke entspricht, wobei die radiale Wanddicke des Stanzabschnitts im Bereich seiner freien Stirnseite von der Außenseite des Stanzabschnitts bis zum Nenndurchmesser des Gewindes einer Dicke zwischen dem 1,2- bis 1,8- und vorzugsweise dem 1,5-fachen der vorgesehenen Blechteildicke entspricht.

2. Selbststanzendes Mutterelement gemäß Anspruch 1, **dadurch gekennzeichnet, dass** der Stanzabschnitt (22) in Draufsicht polygonal ist mit gerundeten Ecken (36) an den Übergängen von einer Seite des Polygons zur nächsten.

3. Selbststanzendes Mutterelement nach Anspruch 2, **dadurch gekennzeichnet, dass** auch das Kopfteil (14) in Draufsicht eine der polygonalen Form des Stanzabschnitts (22) entsprechende polygonale Form aufweist, ebenfalls mit gerundeten Ecken (36").

4. Selbststanzendes Mutterelement nach Anspruch 2, **dadurch gekennzeichnet, dass** das Kopfteil (14) in Draufsicht kreisrund ist.

5. Selbststanzendes Mutterelement nach einem der Ansprüche 2 bis 4, **dadurch gekennzeichnet**, das der Stanzabschnitt (22) in Draufsicht eine Form aufweist, die aus der Gruppe quadratisch, rechteckig, fünfeckig oder sechseckig ausgewählt ist.

6. Selbststanzendes Mutterelement nach Anspruch 1, **dadurch gekennzeichnet, dass** der Stanzabschnitt und das Kopfteil jeweils in Draufsicht zumindest im Wesentlichen kreisrund sind.

7. Selbststanzendes Mutterelement nach einem der vorhergehenden Ansprüche in der Form eines Einpresselements, bei dem der Stanzabschnitt (22) des Mutterelements keine Hinterschneidung aufweist.

8. Selbststanzendes Mutterelement nach einem der vorhergehenden Ansprüche 1 bis 7, **dadurch gekennzeichnet, dass** die Umfangsfläche (34) in beliebigen radialen Ebenen, die die Längsachse (18) einschließen, entweder einen achsparallelen Verlauf oder einen zu der Längsachse eingeschlossenen Winkel von größer als 0° bis 5° aufweist, wobei die Umfangsfläche (34) von der Blechanlagefläche (20) bis zu der Stanzkante (28) gehend einen divergierenden Verlauf hat.

9. Selbststanzendes Mutterelement nach einem der vorhergehenden Ansprüche, **dadurch gekennzeichnet, dass** der Übergang von der Umfangsfläche (34) in die Blechanlagefläche (20) gerundet ist oder die Form einer Schrägfläche aufweist und in einer axialen bzw. radialen Schnittebene gesehen mit der Blechanlagefläche einen eingeschlossenen Winkel im Bereich zwischen 85° und 90° bildet.

10. Selbststanzendes Mutterelement nach einem der vorhergehenden Ansprüche, **dadurch gekennzeichnet, dass** Verdrehsicherungsnasen (90, 94) vorgesehen sind, die die Form von sich in axialer Richtung erstreckenden Rippen (90) am Stanzabschnitt aufweisen.

11. Selbststanzendes Mutterelement nach einem der vorhergehenden Ansprüche 1 bis 10 in der Form eines Einpresselements, bei dem der Stanzabschnitt (22) des Mutterelements ausgelegt ist, um diesen durch die Verdrängung von Blechmaterial bei der Ausbildung eines Stanzloches im Blechteil und eine das Stanzloch und den Stanzabschnitt (22) umgebende Ringvertiefung (62) auf der der Blechanlagefläche des Mutterelements abgewandten Seite des Blechteils, so umzuformen, dass er eine am Stanzabschnitt ausgebildete und Blechmaterial aufnehmende Einschnürung bzw. Rille (26) aufweist, die sich durch Stauchung des Elements während des Durchstanzens des Blechteils (40) und/oder durch den Würgegriff des Blechmaterials, d.h. durch die klemmende Ringspannung des Blechmaterials, ausbildet.

12. Zusammenbauteil bestehend aus einem selbststanzenden Mutterelement (10) nach einem der vorhergehenden Ansprüche und einem Blechteil (14), **dadurch gekennzeichnet, dass** das Blechteil (40) ein Stanzloch mit einer Form entsprechend der Form des Stanzabschnitts (22) aufweist, dass das Material des Blechteils (40) auf der der Blechanlagefläche (20) abgewandten Seite (68) des Blechteils benachbart zum Stanzabschnitt eine den Stanzabschnitt (22) umgebende Vertiefung aufweist (62), und dass sich das Material des Lochrandes aufgrund der Ausbildung der Vertiefung (62) in das Mutterelement (10) hineinerstreckt und sich dort in einer Rille (26) befindet, die sich radial in den Stanzabschnitt (22) und möglicherweise auch axial in den Kopfteil (14) im Bereich des Übergangs von der Umfangsfläche (34) in die Blechanlagefläche (20) hineinerstreckt.

13. Zusammenbauteil nach dem Anspruch 12, **dadurch gekennzeichnet, dass** das Mutterelement (10) eine Festigkeit im Bereich von 700 bis 900 MPa und das Blechteil (40) eine Festigkeit im Bereich von größer als 900 bis über 1400 MPa aufweist.

14. Zusammenbauteil nach Anspruch 12 oder 13, **dadurch gekennzeichnet, dass** das Blechteil (40) im Bereich der Anbringung des Mutterelements (10) und auch radial außerhalb dieses Bereichs in einer Ebene (E) liegt, und dass die freie Stirnseite (30) des Stanzabschnitts (22) von der der Blechanlagefläche (20) abgewandten Seite zurückversetzt ist.

15. Zusammenbauteil nach Anspruch 12 oder 13, **dadurch gekennzeichnet, dass** das Blechteil (40) mit einer Sicke (70) vorgesehen ist, dass die der Blechanlagefläche (20) abgewandte Seite (76) des Blechteils (40) unmittelbar außerhalb der Sicke in einer Ebene (E) liegt, und dass die freie Stirnseite (30) des Stanzabschnitts (22) innerhalb der Sicke (70) vor die der Blechanlagefläche abgewandten Seite (76) des Blechteils (40) vorsteht, jedoch von der genannten Ebene (E) zurückversetzt ist.

16. Zusammenbauteil nach einem der vorhergehenden Ansprüche 12 bis 15, **dadurch gekennzeichnet, dass**, wenn das Mutterelement (10) mit Verdrehsicherungsnasen vorgesehen ist, die die Form von sich in axialer Richtung erstreckenden Rippen am Stanzabschnitt (22) aufweisen, die an der Umfangsfläche (34) angeordnet sind, Verdrehsicherungsvertiefungen entsprechend der Form der Verdrehsicherungsrippen im Lochrand des Blechteils (40) ausgebildet sind.

## Claims

1. A self-piercing nut element (10) that is designed to be pressed into a sheet metal part (40), with the nut element having the following features:
a head part (14) forming a flange (12), a central bore (16) in the head part which is designed to receive a bolt element and which has a central longitudinal axis (18), a sheet metal contact surface (20) formed in a plane standing at least substantially perpendicular to the central longitudinal axis at the flange (12), as well as a piercing section (22) extending away from the head part at the side of the sheet metal contact surface in the direction of the longitudinal axis, **characterized in that** for the self-piercing attachment of the nut element into a sheet metal part (40) of higher strength, the nut element is designed in such a way that the piercing section (22) directly transitions into the sheet metal contact surface (20) and **in that** the piercing section (22) has a piercing edge (28) at its free end face with the piercing edge (28) being spaced apart from the sheet metal contact surface (20) by a peripheral surface (34) having an axial height which corresponds to at least 30% and preferably to at least 50% of the sheet metal thickness, wherein the radial wall thickness of the piercing section in the region of its free end face from the outer side of the piercing section up to the nominal diameter of the thread corresponds to a thickness between 1.2 to 1.8 and preferably to 1.5 times the intended sheet metal thickness.

2. A self-piercing nut element in accordance with claim 1, **characterized in that** the piercing section (22) is polygonal in plan view with rounded corners (36) at the transitions from one side of the polygon to the next.

3. A self-piercing nut element in accordance with claim 2, **characterized in that** the head part (14) in plan view also has a polygonal form corresponding to the polygonal form of the piercing section (22), likewise with rounded corners (36").

4. A self-piercing nut element in accordance with claim 2, **characterized in that** the head part (14) is circularly rounded in plan view.

5. A self-piercing nut element in accordance with any one of the preceding claims 2 to 4, **characterized in that** the piercing section (22) has a shape in plan view which is selected from the group of square, rectangular, pentagonal and hexagonal.

6. A self-piercing nut element in accordance with claim 1, **characterized in that** the piercing section and the head part are each at least substantially circular in plan view.

7. A self-piercing nut element in accordance with any one of the preceding claims, in the form of a press-in element in which the piercing section (22) of the nut element has no undercut.

8. A self-piercing nut element in accordance with any one of the preceding claims 1 to 7, **characterized in that** the peripheral surface (34) in any desired radial plane which includes the longitudinal axis (18) either has an axially parallel extent or an enclosed angle relative to the longitudinal axis of greater than 0° to 5°, with the peripheral surface (34) having a diverging extent starting from the sheet metal contact surface (20) up to the piercing edge (28).

9. A self-piercing nut element in accordance with any one of the preceding claims, **characterized in that** the transition from the peripheral surface (34) to the sheet metal contact surface (20) is rounded or has the form of an oblique surface and forms an enclosed angle in the range between 85° and 90° with the sheet metal contact surface when viewed in an axial or radial sectional plane respectively.

10. A self-piercing nut element in accordance with any one of the preceding claims, **characterized in that** noses providing security against rotation (90, 94) are provided which have the form of ribs (90) extending in the axial direction at the piercing section.

11. A self-piercing nut element in accordance with any one of the preceding claims 1 to 10, in the form of a press-in element in which the piercing section (22) of the nut element is designed to reshape the piercing section by the displacement of sheet metal material on the formation of a piercing hole in the sheet metal part and on the formation of a ring recess (62) surrounding the piercing hole and the piercing section (22) at the side of the sheet metal part remote from the sheet metal contact surface of the nut element in such a way that it has a constriction or groove (26) respectively which is formed at the piercing section and which receives material that is formed by a compression of the element on a piercing through of the sheet metal part (40) and/or by the stranglehold of the sheet metal material, this means by the clamping ring tension of the sheet metal material.

12. A component assembly consisting of a self-piercing nut element (10) in accordance with any one of the preceding claims and a sheet metal part (40),
**characterized in that** the sheet metal part (40) has a pierced hole having a shape corresponding to the shape of the piercing section (22); **in that** the material of the sheet metal part (40) at the side (68) of the sheet metal part remote from the sheet metal contact surface (20) has a recess (62) adjacent to the piercing section and surrounding the piercing section (22); and **in that** the material of the hole rim extends into the nut element (10) due to the formation of the recess (62) and is present their in a groove (26) that extends radially into the piercing section (22) and possibly also axially into the head part (14) in the region of the transition of the peripheral surface (34) into the sheet metal contact surface (20).

13. A component assembly in accordance with claim 12, **characterized in that** the nut element (10) has a strength in the range of 700 to 900 MPa and the sheet metal part (40) has a strength in the range from greater than 900 up to above 1400 MPa.

14. A component assembly in accordance with claim 12 or claim 13, **characterized in that** the sheet metal part (40) lies in a plane (E) in the region of the attachment of the nut element (10) and also radially outside of this region; and **in that** the free end face (30) of the piercing section (22) is set back from the side remote from the sheet metal contact surface (20).

15. A component assembly in accordance with claim 12 or claim 13, **characterized in that** the sheet metal part (40) is provided with a depression (70), **in that** the side (76) of the sheet metal part (40) remote from the sheet metal contact surface (20) lies directly outside of the depression in a plane (E); and **in that** the free end face (30) of the piercing section (22) projects within the depression (70) in front of the side (76) of the sheet metal part (40) remote from the sheet metal contact surface, but is offset rearwardly from the said plane (E).

16. A component assembly in accordance with any one of the preceding claims 12 to 15, **characterized in that**, when the nut element (10) is provided with noses providing security against rotation which have the shape of ribs extending in the axial direction at the piercing section (22) which are arranged at the peripheral surface (34), recesses providing security against rotation corresponding to the shape of the ribs providing security against rotation are formed in the hole rim of the sheet metal part (40).

## Revendications

1. Élément formant écrou autopoinçonneur (10), qui est conçu pour être enfoncé à la presse dans une pièce en tôle (40), ledit élément formant écrou comprenant les éléments techniques suivants :
une partie de tête (14) formant une bride (12), un perçage central taraudé (16) dans la partie de tête, qui est conçu pour recevoir un élément formant boulon et qui comporte un axe longitudinal central (18), une surface d'appui de tôle (20) ménagée sur la bride (12) et dressée dans un plan au moins sensiblement perpendiculaire à l'axe longitudinal central, ainsi qu'un tronçon de poinçonnage (22) qui s'étend sur le côté de la surface d'appui de tôle depuis la partie de tête dans une direction en éloignement de l'axe longitudinal,
**caractérisé en ce que**, en vue d'appliquer l'élément formant écrou par autopoinçonnage dans une pièce en tôle (40) de plus forte résistance, l'élément formant écrou est conçu de telle façon que le tronçon de poinçonnage (22) se transforme directement dans la surface d'appui de tôle (20) et **en ce que** le tronçon de poinçonnage (22) comporte une arête de poinçonnage (28) sur sa face frontale libre, dans lequel l'arête de poinçonnage (28) est écartée de la surface d'appui de tôle (20) via une surface périphérique (34) avec une hauteur axiale qui correspond au moins à 30 % et de préférence au moins à 50 % de l'épaisseur de tôle, dans lequel l'épaisseur radiale de la paroi du tronçon de poinçonnage dans la zone de sa face frontale libre, depuis le côté extérieur du tronçon de poinçonnage jusqu'au diamètre nominal du pas de vis, correspond à une épaisseur entre 1,2 jusqu'à 1,8 et de préférence à 1,5 fois l'épaisseur prévue de la pièce en tôle.

2. Élément formant écrou autopoinçonneur selon la revendication 1, **caractérisé en ce que** le tronçon de poinçonnage (22) est polygonal en vue de dessus avec des coins arrondis (36) au niveau des transitions depuis un côté du polygone jusqu'au suivant.

3. Élément formant écrou autopoinçonneur selon la revendication 2, **caractérisé en ce que** la partie de tête (14) présente également en vue de dessus une forme polygonale, correspondant à la forme polygonale du tronçon de poinçonnage (22), également avec des coins arrondis (36").

4. Élément formant écrou autopoinçonneur selon la revendication 2, **caractérisé en ce que** la partie de tête (14) est circulaire en vue de dessus.

5. Élément formant écrou autopoinçonneur selon l'une des revendications 2 à 4, **caractérisé en ce que** le tronçon de poinçonnage (22) présente en vue de dessus une forme qui est sélectionnée parmi le groupe des formes quadratique, rectangulaire, pentagonale ou hexagonale.

6. Élément formant écrou autopoinçonneur selon la revendication 1, **caractérisé en ce que** le tronçon de poinçonnage et la partie de tête sont au moins sensiblement circulaires en vue de dessus.

7. Élément formant écrou autopoinçonneur selon l'une des revendications précédentes, sous la forme d'un élément à enfoncer à la presse, dans lequel le tronçon de poinçonnage (22) de l'élément formant écrou ne présente aucune contre-dépouille.

8. Élément formant écrou autopoinçonneur selon l'une des revendications précédentes 1 à 7, **caractérisé en ce que** la surface périphérique (34) présente, dans des plans radiaux quelconques qui incluent l'axe longitudinal (18), soit un tracé parallèle à l'axe soit un angle, inclus avec l'axe longitudinal, plus grand que 0° à 5°, et la surface périphérique (34) présente un tracé divergent en allant de la surface d'appui de tôle (20) jusqu'à l'arête de poinçonnage (28).

9. Élément formant écrou autopoinçonneur selon l'une des revendications précédentes, **caractérisé en ce que** la transition de la surface périphérique (34) vers la surface d'appui de tôle (20) est arrondie ou présente la forme d'une surface oblique et, vue dans un plan de coupe axial ou radial, forme avec la surface d'appui de tôle un angle inclus dans la plage entre 85° et 90°.

10. Élément formant écrou autopoinçonneur selon l'une des revendications précédentes, **caractérisé en ce qu'**il est prévu des ergots antirotation (90, 94) qui présentent la forme de nervures (90) s'étendant en direction axiale sur le tronçon de poinçonnage.

11. Élément formant écrou autopoinçonneur selon l'une des revendications précédentes 1 à 10 sous la forme d'un élément à enfoncer à la presse, dans lequel le tronçon de poinçonnage (22) de l'élément formant écrou est conçu pour déformer celui-ci par refoulement du matériau de la tôle lors de la formation d'un trou de poinçonnage dans la pièce en tôle, et un renfoncement annulaire (62) qui entoure le trou de poinçonnage et le tronçon de poinçonnage (22), vers le côté de la pièce en tôle détourné de la surface d'appui de tôle de l'élément formant écrou de telle manière qu'il comprend un rétrécissement ou une rainure (26), réalisé(e) sur le tronçon de poinçonnage et recevant le matériau de la tôle qui se forme par refoulement de l'élément pendant le poinçonnage de la pièce en tôle (40) et/ou par la prise en étranglement du matériau en tôle, c'est-à-dire par la tension annulaire de serrage du matériau en tôle.

12. Assemblage de composants constitué d'un élément formant écrou autopoinçonneur (10) selon l'une des revendications précédentes, et d'une pièce en tôle (40), **caractérisé en ce que** la pièce en tôle (40) comporte un trou poinçonné avec une forme correspondant à la forme du tronçon de poinçonnage (22), **en ce que** le matériau de la pièce en tôle (40) comporte, sur le côté (68) de la pièce en tôle détournée de la surface d'appui de tôle (20) et au voisinage du tronçon de poinçonnage, un renfoncement qui entoure le tronçon de poinçonnage (22), et **en ce que** le matériau de la bordure du trou, en raison de la réalisation du renfoncement (62), s'étend jusque dans l'élément formant écrou (10), et se trouve à cet endroit dans une rainure (26) qui s'étend radialement dans le tronçon de poinçonnage (22) et éventuellement également axialement dans la partie de tête (14), dans la région de la transition depuis la surface périphérique (34) vers la surface d'appui de tôle (20).

13. Assemblage de composants selon la revendication 12, **caractérisé en ce que** l'élément formant écrou (10) présente une résistance dans la plage de 700 à 900 MPa, et la pièce en tôle (40) présente une résistance dans la plage supérieure à 900 jusqu'à plus de 1400 MPa.

14. Assemblage de composants selon la revendication 12 ou 13, **caractérisé en ce que** la pièce en tôle (40) est disposée dans un plan (E), dans la région de l'application de l'élément formant écrou (10) et également radialement à l'extérieur de cette région, et **en ce que** le côté frontal libre (30) du tronçon de poinçonnage (22) est en retrait depuis le côté détourné de la surface d'appui de tôle (30).

15. Assemblage de composants selon la revendication 12 ou 13, **caractérisé en ce que** la pièce en tôle (40) est dotée d'une moulure (70), **en ce que** le côté (76) de la pièce en tôle (40) détourné de la surface d'appui de tôle (20) immédiatement à l'extérieur de la moulure est disposé dans un plan (E), et **en ce que** le côté frontal libre (30) du tronçon de poinçonnage (22) à l'intérieur de la moulure (70) dépasse en avant du côté (76) de la pièce en tôle (40) détournée de la surface d'appui de tôle, mais est en retrait par rapport au plan précité (E).

16. Assemblage de composants selon l'une des revendications 12 à 15, **caractérisé en ce que**, quand l'élément formant écrou (10) est pourvu d'ergots antirotation qui présentent la forme de nervures s'étendant en direction axiale sur le tronçon de poinçonnage (22) et qui sont agencés sur la surface périphérique (34), des renfoncements antirotation qui correspondent à la forme des nervures antirotation sont ménagés dans la bordure du trou de la pièce en tôle (40).
